# EUROPEAN PATENT SPECIFICATION

(11) **EP 3 869 072 B1**
(45) Date of publication and mention of the grant of the patent: **03.04.2024**
(21) Application number: 21158523.7
(22) Date of filing: 22.02.2021
(51) Int. Cl.: F16J 15/3236, F16C 33/78, F16C 33/80, F16J 15/3256, F16C 23/08

(54) **SHIELDED SUPPORT FOR INDUSTRIAL PLANTS**
ABGESCHIRMTER TRÄGER FÜR INDUSTRIEANLAGEN
SUPPORT BLINDÉ POUR INSTALLATIONS INDUSTRIELLES

(30) Priority: 21.02.2020 IT 202000003629
(43) Date of publication of application: 25.08.2021
(73) Proprietor: Millennium Engineering S.r.l., 35010 Villa del Conte (PD) (IT)
(72) Inventor: PRIORE, Luca, 35010 VILLA DEL CONTE (PD) (IT)
(74) Representative: Studio Torta S.p.A.

(56) References cited:
- EP-A1- 3 070 355
- EP-A2- 2 661 947
- DE-A1-102013 225 331
- JP-U- S6 210 103
- JP-U- S6 224 129
- US-A1- 2010 046 874
- US-A1- 2017 198 754

## Description

### CROSS-REFERENCE TO RELATED APPLICATIONS

This patent application claims priority from Italian patent application no. 102020000003629 filed on 21/02/2020.

### TECHNICAL FIELD

The present invention relates to a shielded support for industrial plants, in particular for food industry plants.

### BACKGROUND ART

The working environment of food industry plants is particularly delicate for mechanical components due to many factors, such as humidity, temperature, potential contact with liquids and/or food.

In this context, certain types of components, such as the bearings, must be approved and certified, in order to ensure the health of the working environment and prevent food contamination. However, the bearings must be lubricated for proper operation.

Therefore, bearings for this type of use can either use a food-compatible lubricant or must be isolated from the working environment (with the additional difficulty, if necessary, of having to provide access to perform maintenance activities such as re-lubrication with the working environment.

In this context, shielded supports are known, generally also known as Y-shaped supports. Y-shaped shielded supports are supports that allow the inclination of a rotatable component with respect to an ideal axis of rotation. In other words, Y-shaped supports are configured to allow the inclination and oscillation of the rotatable component.

In the known types of Y-shaped shielded supports, the bearings are shielded by a sealing element inside a block and in some configurations they do not need to perform re-lubrication activities. These types of shielded supports are configured to isolate the bearing from the external environment and eliminate re-lubrication activities. These types of shielded supports can be advantageously used in those areas where it is not possible to carry out re-lubrication activities and/or in humid areas and/or to ensure maximum hygiene.

However, the known types of shielded supports have the disadvantage that the sealing elements are generally oil seals which do not ensure a correct tightness of the seals from the outside toward the inside of the bearing itself. In other words, supports of the known type do not prevent particles of solid products (powders/granules) and droplets of moisture from lurking, during use, near and inside the bearing.

This is absolutely detrimental and significantly reduces the life span of the bearings/supports. Moreover, in the case of installation in food plants at low temperatures (temperatures below 0°) and in the presence of a high moisture/liquid rate, the drops of moisture that lurk inside the bearing turn into ice and tend to worsen the operation thereof and break/detach the seals.

In other words, the known types of shielded supports have the disadvantage of having a very limited service life, which generally is around 3 or 4 months, and requiring frequent replacement of the parts, which result in high maintenance costs.

Document EP 3 070 355 A1 discloses, especially in figure 6, a Y-shaped shielded support according to the preamble of claim 1 appended herewith. Another known Y-shaped shielded support is shown in JP S62 24129 U, figures 3 and 4.

### SUMMARY OF THE INVENTION

It is an object of the present invention to provide a shielded support which allows the above-described drawbacks to be overcome.

According to the present invention, there is provided a shielded support as mentioned in the appended claims.

### BRIEF DESCRIPTION OF THE DRAWINGS

The invention will now be described with reference to the accompanying drawings, which illustrate non-limiting embodiments thereof:
- Figure 1 is a side view of a shielded support according to the present invention, in use;

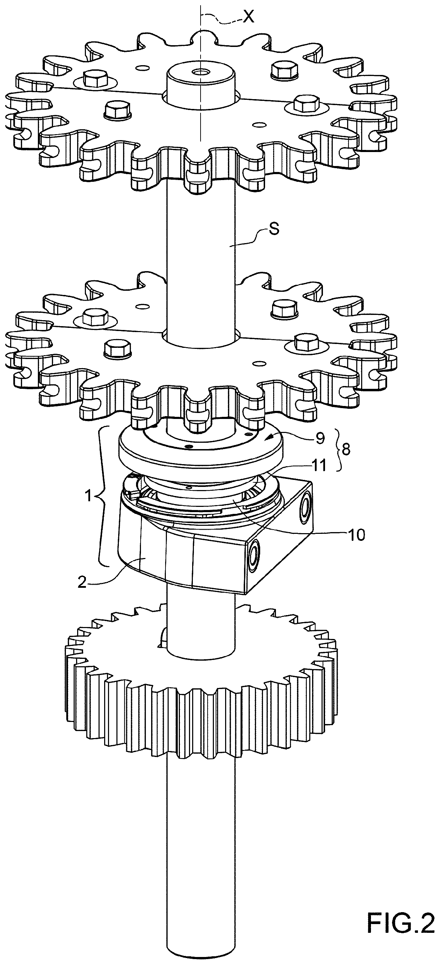

- Figure 2 is an exploded view of Figure 1;
- Figure 3 is a partially exploded side view of a shielded support according to the present invention;
- Figure 4 is a section along the line IV-IV in Figure 3;

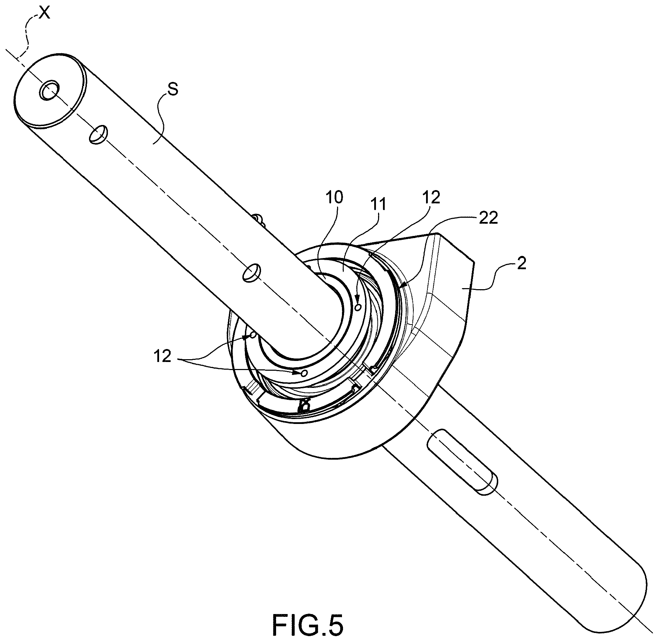

- Figure 5 is a perspective view of a detail of the shielded support according to the present invention, with some parts removed for clarity;

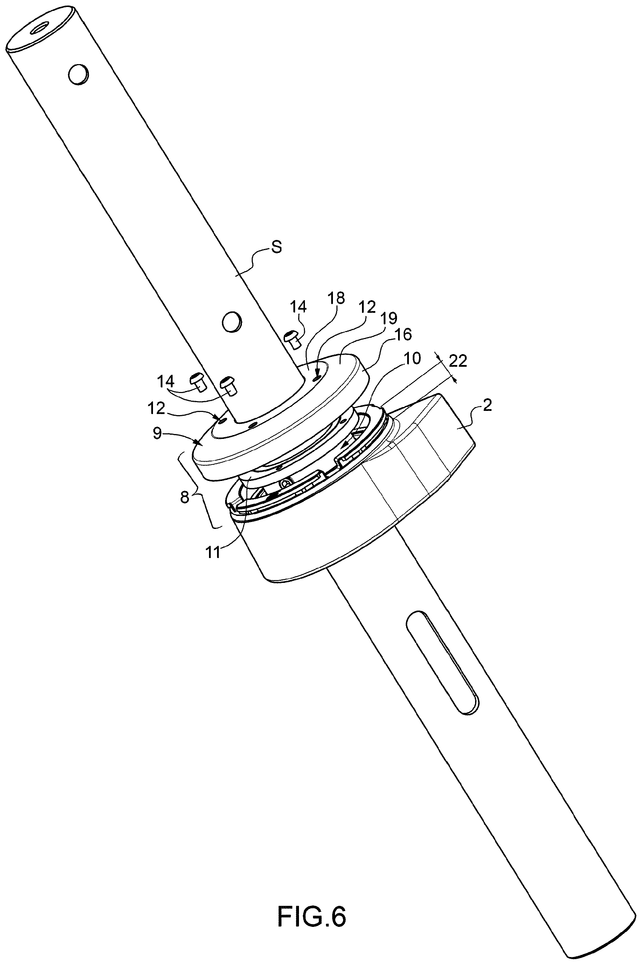

- Figure 6 is similar to Figure 5 and shows an exploded perspective view of a shielded support according to the present invention;
- Figure 7 is a plan view of a sealing device according to the present invention;
- Figure 8 is a section along the line VIII-VIII in Figure 7.

### DETAILED DESCRIPTION OF THE INVENTION

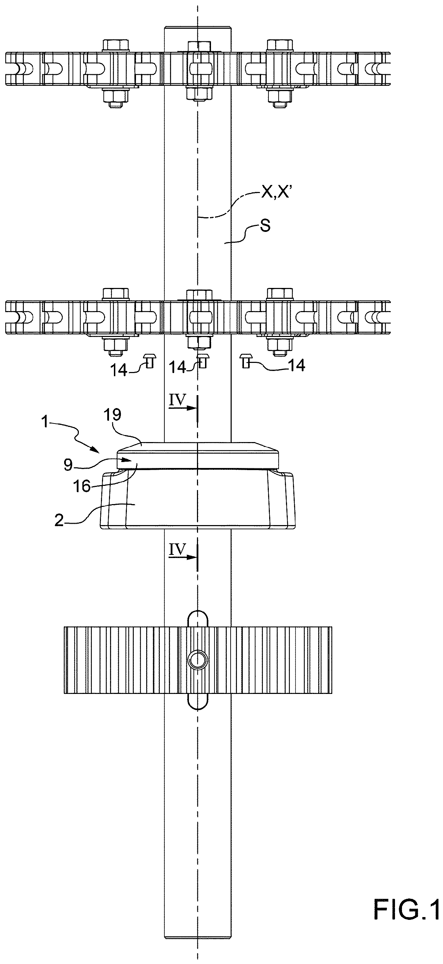

Figure 1 shows a shielded support 1 according to the present invention, in use. As shown in Figure 1, the shielded support 1 is fitted on a shaft S having a rotation axis X.

The shielded support 1 comprises a supporting block 2, which has a housing 3, and a bearing 4 arranged inside the housing 3.

Without losing generality, it can be seen that the shape and size of the supporting block 2 shown in the figures are provided by way of non-limiting example, in fact, according to variants not shown, the supporting block 2 can have different shapes and/or sizes.

Similarly, the bearing 4 shown in the figures is provided by way of non-limiting example, since it can be replaced by any other type of bearing also comprising other components not mentioned herein, such as sealing elements or the like.

The bearing 4 may or may not be provided with a re-lubrication system. In a known way, the bearing 4, in use, has a lubricant to favour the sliding of the rolling elements 7.

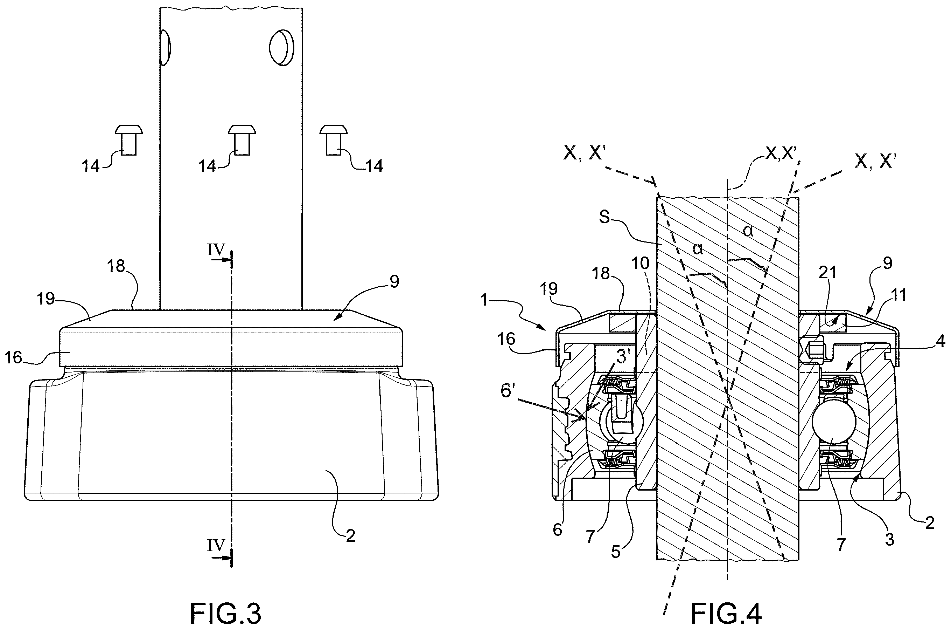

As shown in Figure 4, the bearing 4 in turn comprises an internal ring 5, an external ring 6 and a plurality of rolling elements 7 interposed between the internal ring 5 and the external ring 6.

The internal ring 5 is fitted onto the shaft S and is rotatable about the rotation axis X together with the shaft S. In other words, the internal ring 5 is rotatable and the external ring 6 is fixed. According to a variant, not shown, the internal ring can be fitted onto a fixed component and the external ring 6 can be rotatable.

The rolling elements 7 allow, in use, a rotation of the internal ring 5 relative to the external ring 6.

The external ring 6 is fitted inside the housing 3 of the supporting block 2. The supporting block 2 is configured to be anchored, in a known manner, to an external support (not shown).

Advantageously, the shielded support 1 is of the Y-shaped type. The shielded support 1 is configured to allow an inclination α (Figure 4) of the shaft S with respect to an ideal rotation axis X. In other words, the shielded support 1 is configured to allow the oscillation of the shaft S. In fact, industrial plants must allow oscillations (up to several degrees) of the shaft S during use or in order to favour installation and maintenance.

Advantageously, the external ring 6 has a convex outer radial surface 6' and the housing 3 has a concave inner radial surface 3'. The outer radial surface 6' and the inner radial surface 3' are movable relative to one another and form a kinematic pair, in particular a spherical pair that can rotate about three axes of rotation (Figure 4).

Advantageously, the shielded support 1 comprises a sealing device 8 which is configured to prevent the passage of particles and/or moisture from the external environment toward the inside of the shielded support 1, and in particular, toward the inside, that is, between the internal ring 5 and the external ring 6 of the bearing 4.

Advantageously, the sealing device 8 comprises a shield 9 which rotates integrally with the shaft S and a connecting unit 11, 14 configured to fasten the shield 9 to the bearing 4. In particular, the connecting unit 11, 14 is configured to connect the shield 9 to the rotatable ring, in the example shown herein the internal ring 5, of the bearing 4.

According to the example shown herein, the shielded support 1 is only shielded on one side (the side facing upwards in the orientation shown in the figures). Without losing generality, according to a variant, not shown, the shielded support comprises a pair of mutually opposite sealing devices, so as to shield both sides of the bearing 4.

According to the example shown herein, the internal ring 5 has an extension along the rotation axis X greater than the extension of the external ring 4 and the rolling elements 7. In other words, the internal ring 5 has a connecting portion 10 projecting axially, in particular from the rolling elements 7 and the external ring 6, so that it can be connected to the sealing device, as will be better illustrated below.

According to the example shown herein, the connecting unit 11, 14 of the sealing device 8 comprises a collar 11, which is configured, in use, to be fitted onto the rotatable ring of the bearing (according to the example shown herein, the collar 11 is configured to be fitted onto the connecting portion 10), and one or more fasteners 14.

Advantageously, the collar 11, in use, is fitted onto the rotatable ring, in this case the internal ring 5, so as to rotate integrally with said internal ring 5 about the rotation axis X. According to a variant, not shown, said collar is directly fitted onto said shaft S.

The collar 11 is a disc-shaped metal plate coaxial with the rotation axis X. The collar 11 has one or more holes 12, in particular threaded holes, parallel to the rotation axis X.

The connecting unit 11, 14 of the sealing device 8 further comprises a fastener 14 (such as a screw or rivet) for each hole 12. Each fastener 14 is configured to couple the shield 9 to the collar 11. According to a variant, not shown, the connecting portion 10 is configured (for example, a threaded flange is made in one piece with the internal ring of the bearing) to be directly coupled to the shield 9 without the interposition of the collar 11. According to a variant, not shown, the shield 9 is directly fitted onto the shaft S. In this case, the position of the shield 9 along the shaft S is determined so as to allow the shielded support 1 to be closed correctly.

The shield 9 is configured to be arranged, in use, in abutment against the collar 11 and the end of the internal ring 5. In this way, the shield 9 can be axially constrained with respect to the bearing 4 and the supporting block 2.

Advantageously, the radial extension of the shield 9 is such as to radially shield the entire bearing 4.

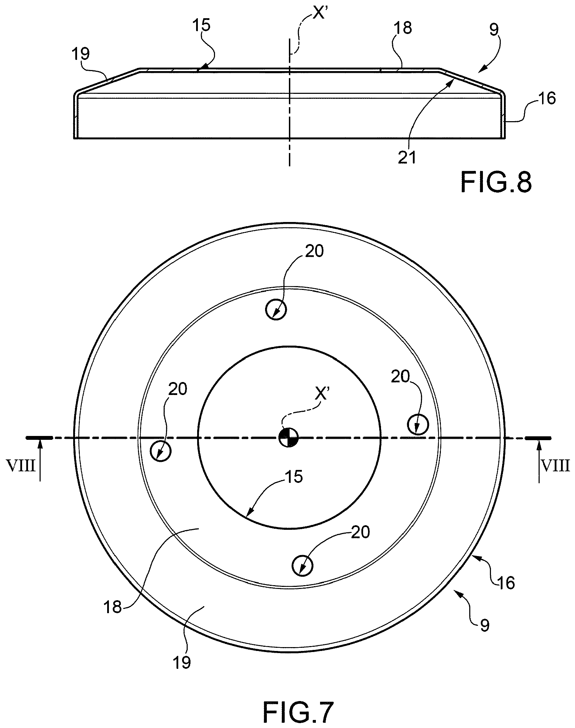

As shown in greater detail in Figures 7 and 8, the shield 9 is a flat body, i.e., a plate having an axisymmetric shape with an axis of symmetry X'. Preferably, the shield 9 is made of a metal sheet.

The shield 9 is disc-shaped and has a circular opening 15. The diameter of the opening 15 is such as to allow the shield 9 to be fitted onto the shaft S with interference or clearance.

The shield 9 is substantially cup-shaped with a circular lateral wall 16 and a top wall 18. According to the example shown herein, the shield 9 also has an inclined connecting portion 19 between the top wall 18 and the lateral wall 16.

The opening 15 has a circular shape, is formed in the top wall 18 and is in a central position so as to be substantially coaxial with the axis of symmetry X'.

In addition, the shield 9 has holes 20 crossing the top wall 18. Each hole 20 of the shield 9 is formed so as to align, in use, with a respective hole 12 of the collar 11 so as to allow coupling by means of the fastener 14.

The top wall 18, the connecting portion 19 and the lateral wall 16 define a housing 21.

The housing 21 is configured to house the collar 11 and be able to fit onto a respective portion 22 of the supporting block 2.

According to the example shown herein, the lateral wall 16 encircles the portion 22 of the block. The lateral wall 16 is spaced from the portion 22 so that the lateral wall 16 can rotate without contact around the portion 22.

Advantageously, the lateral wall 16 is fitted with clearance around the portion 22. In particular, the clearance between the lateral wall 16 and the portion 22 is a function of the total oscillation and the maximum possible degree of inclination α of the shaft S. In this way, advantageously, the shielding of the bearing 4 is ensured in any working condition.

According to a variant, not shown, the sealing device 8 comprises a sealing element interposed between the portion 22 of the block and the lateral wall 16, this allows the shielded support to be hermetically sealed.

In use, the bearing 4 is mounted in a known manner on the shaft S together with the supporting block 2. Advantageously, during installation and/or use, the shaft S can be inclined by an angle α in any direction with respect to an ideal longitudinal axis X, due to the kinematic pair between the fixed ring 6 and the housing 3.

Thus, the shield 9 is fastened to the collar 11. Therefore, mounting the shielded support 1 is extremely simple and fast.

Advantageously, the shield 9 of the shielded support 1 rotates together with the shaft S, since the shield 9 is fastened to the rotatable ring of the bearing 4. In the example shown above, the shield 9 rotates together with the rotatable internal ring 5. According to a variant, not shown, the shield 9 can rotate together with the external ring if the latter is the rotatable ring.

Advantageously, there is no relative movement between the shield 9 and the shaft S in the shielded support 1 of the type described above. This prevents the shield 9 from wearing out due to rubbing in the vicinity of the shaft S.

In other words, since the shield 9 rotates, in use, together with the shaft S (the motion is transferred by the internal ring 5), the shielded support 1 has a permanent shield not subject to wear in the area where it joins the external rotatable element, in this case the rotating shaft S.

Advantageously, the shielded support 1 of the type described above allows both the inclination and the radial oscillation of the rotating shaft S with respect to an ideal rotation axis, while ensuring the correct and complete shielding of the bearing 4.

Advantageously, the shielded support 1 of the type described above has the interface area of the shield 9 between fixed components and movable components far away from the external rotatable element. In this connection, it is noted that in the example shown above, the contact area between the shield 9 and the shaft S is the area in which generally, in use, greater dirt build-up can occur. In this case, any dirt build-up would be permanently blocked by the shield 9 without the possibility of infiltration.

Advantageously, the shield 9 is a simple and easily replaceable component. In other words, since the shield 9 allows complete protection of the bearing 4, the life span of the bearing 4 can be particularly long even without requiring maintenance activities.

Possible more frequent maintenance activities involve cleaning, and if necessary, replacing the shield 9.

Advantageously, since the interface area between the shield 9 and the supporting block 2 is in a region far away from the bearing 4, in particular outside the portion 22 of the supporting block 2, any wearing out of the shield 9 does not form access openings directed toward the bearing 4. In this way, advantageously, even in the event of wear, the risks that dirt particles can lurk inside the bearing 4, thereby wearing it, are significantly reduced.

Advantageously, the shielded support 1 of the type described above has a much longer life span than the shielded supports of the known type. In fact, the absence of mutually moving members near the shaft S considerably reduces the wear of the shield 9, ensuring its hermetic sealing. Moreover, the absence of moving parts/gaps at the shaft S prevents moisture or water droplets from entering directly inside the bearing 4, with the consequent risk of freezing and therefore breaking the bearing 4 itself.

## Claims

1. A Y-shaped shielded support for industrial plants, comprising a supporting block (2), which is configured to be anchored to an external support, a bearing (4) and a sealing device (8); wherein the supporting block (2) has a housing (3) inside which said bearing (4) is inserted; wherein said bearing (4) comprises a fixed ring (6), a rotatable ring (5) which can rotate relative to said fixed ring (6), and a plurality of rolling elements (7) interposed between said fixed ring (6) and said rotatable ring (5); wherein said rotatable ring (5) is fitted, in use, onto a rotatable component (S); wherein said rolling elements (7) allow, in use, a rotation of the rotatable ring (5) relative to the fixed ring (6); wherein said fixed ring (6) is form-fit mounted inside said supporting block (2) so as to enable said fixed ring (6) to be inclined by an angle (α) with respect to an ideal rotation axis; wherein said rotatable component is a rotating shaft (S) having a rotation axis (X); wherein said bearing (4) is fitted, in use, onto said rotating shaft (S); wherein the rotatable ring is the internal ring (5); wherein said internal ring (5) is fitted onto said rotating shaft (S) to rotate about the rotation axis (X) driven by said rotating shaft (S); wherein said sealing device (8) comprises a shield (9) and a connecting unit (11, 14), which is configured to fix, in use, said shield (9) to said rotatable component (S) so as to avoid, in use, relative motions between said shield (9) and said rotatable ring (5); wherein said shield (9) has an opening (15) configured to house, in use, said rotating shaft (S); wherein said connecting unit (11, 14) is configured to rotate said shield (9) in an integral manner with said internal ring (5) and said rotating shaft (S); wherein said shield (9) has a cup-shaped body having a circular lateral wall (16), a top wall (18) wherein said opening (15) is realized in said top wall (18); wherein said shield (9) is axisymmetric around an axis of symmetry (X'); wherein the radial extension of said shield (9) is greater than the radial extension of the respective bearing (4),
**characterized in that**
said lateral wall (16) is disposed around and encircles a respective portion (22) of the supporting block (2); wherein said lateral wall (16) is spaced from said portion (22) so that the lateral wall (16) can rotate, in use, without contact around said portion (22).

2. A shielded support according to claim 1, wherein said connecting unit (11, 14) comprises a collar (11), which is configured to be fitted, in use, directly onto said rotating shaft (S).

3. A shielded support according to claim 1, wherein said connecting unit (11, 14) comprises a collar (11), which is configured to be fitted, in use, onto a respective portion of said internal ring (5).

4. A shielded support according to claim 2 or 3, wherein said shield (9) has one or more holes (20), which cross said top wall (18); wherein said collar (11) has, in turn, one or more holes (12); wherein said connecting unit (11, 14) comprises one or more fasteners (14) each of which is configured, in use, to pass through a respective hole (20) of said shield (9) and a respective hole (12) of said collar (11).

5. A shielded support according to any of the preceding claims from 2 to 4, wherein said shield (9) has a housing (21) which is configured to house, in use, said collar (11) and to be fitted onto a respective portion (22) of the supporting block (2).

6. A shielded support according to any of the preceding claims and comprising a sealing element interposed between said lateral wall (16) and the respective portion (22) of the supporting block (2).

7. A shielded support according to any of the preceding claims, wherein the distance between the lateral wall (16) and the respective portion (22) of the supporting block (2) is a function of the total radial oscillation and the maximum allowed inclination (α) of the rotatable component (S).

## Patentansprüche

1. Y-förmiger Schirmträger für Industrieanlagen, umfassend einen Tragblock (2), der zur Verankerung an einem externen Träger ausgebildet ist, ein Lager (4) und eine Dichtungsvorrichtung (8); wobei der Stützblock (2) ein Gehäuse (3) aufweist, in das das Lager (4) eingesetzt ist, wobei das Lager (4) einen festen Ring (6), einen drehbaren Ring (5), der sich relativ zu dem festen Ring (6) drehen kann, und eine Vielzahl von Wälzkörpern (7) umfasst, die zwischen dem festen Ring (6) und dem drehbaren Ring (5) angeordnet sind; wobei der drehbare Ring (5) im Gebrauch auf eine drehbare Komponente (S) aufgesetzt ist, wobei die Wälzkörper (7) im Gebrauch eine Drehung des drehbaren Rings (5) relativ zum festen Ring (6) ermöglichen; wobei der feste Ring (6) formschlüssig innerhalb des Stützblocks (2) montiert ist, so dass der feste Ring (6) um einen Winkel (α) in Bezug auf eine ideale Drehachse geneigt werden kann, wobei die drehbare Komponente eine Drehwelle (S) mit einer Drehachse (X) ist; wobei das Lager (4) im Gebrauch auf der Drehwelle (S) angebracht ist, wobei der drehbare Ring der Innenring (5) ist; wobei der Innenring (5) bei der Verwendung auf der Drehwelle (S) angebracht ist, um sich um die die Drehachse (X) zu drehen, die von der Drehwelle (S) angetrieben wird; wobei die Dichtungsvorrichtung (8) eine Abschirmung (9) und eine Verbindungseinheit (11, 14) umfasst, die so konfiguriert ist, dass sie im Gebrauch die Abschirmung (9) an der drehbaren Komponente (S) befestigt, um im Gebrauch Relativbewegungen zwischen der Abschirmung (9) und dem drehbaren Ring (5) zu vermeiden; wobei die Abschirmung (9) eine Öffnung (15) aufweist, die so konfiguriert ist, dass sie im Gebrauch die Drehwelle (S) aufnimmt; wobei die Verbindungseinheit (11, 14) so gestaltet ist, dass sie die Abschirmung (9) in einer integralen Weise mit dem Innenring (5) und der Drehwelle (S) dreht; wobei die Abschirmung (9) einen becherförmigen Körper mit einer kreisförmigen Seitenwand (16), einer oberen Wand (18) aufweist, wobei die Öffnung (15) in der oberen Wand (18) realisiert ist, wobei die Abschirmung (9) achsensymmetrisch um eine Symmetrieachse (X') ist; wobei die radiale Ausdehnung der Abschirmung (9) größer ist als die radiale Ausdehnung des jeweiligen Lagers (4),
**dadurch gekennzeichnet, dass** die Seitenwand (16) um einen entsprechenden Abschnitt (22) des Stützblocks (2) herum angeordnet ist und diesen umgibt; wobei die Seitenwand (16) von dem Abschnitt (22) beabstandet ist, so dass sich die Seitenwand (16) im Gebrauch ohne Kontakt um den Abschnitt (22) herum drehen kann.

2. Abgeschirmte Halterung nach Anspruch 1, wobei die Verbindungseinheit (11, 14) einen Kragen (11) umfasst, der so konfiguriert ist, dass er im Gebrauch direkt auf die Drehwelle (S) aufgesetzt werden kann

3. Abgeschirmte Halterung nach Anspruch 1, wobei die Verbindungseinheit (11, 14) einen Kragen (11) umfasst, der so konfiguriert ist, dass er bei der Verwendung auf einem entsprechenden Abschnitt des Innenrings (5) befestigt wird.

4. Abgeschirmte Halterung nach Anspruch 2 oder 3, wobei die Abschirmung (9) ein oder mehrere Löcher (20) aufweist, die die obere Wand (18) kreuzen; wobei der Kragen (11) seinerseits ein oder mehrere Löcher (20) aufweist, wobei die Verbindungseinheit (11, 14) ein oder mehrere Befestigungselemente (14) umfasst, von denen jedes so konfiguriert ist, dass es im Gebrauch durch ein entsprechendes Loch (20) der Abschirmung (9) und ein entsprechendes Loch (12) des Kragens (11) geführt wird.

5. Abgeschirmte Halterung nach einem der vorhergehenden Ansprüche 2 bis 4, wobei die Abschirmung (9) ein Gehäuse (21) aufweist, das so gestaltet ist, dass es im Gebrauch den Kragen (11) aufnimmt und auf einen entsprechenden Abschnitt (22) des Stützblocks (2) aufgesetzt werden kann.

6. Abgeschirmte Halterung nach einem der vorhergehenden Ansprüche, die ein Dichtungselement aufweist, das zwischen der Seitenwand (16) und dem jeweiligen Abschnitt (22) des Stützblocks (2) angeordnet ist.

7. Abgeschirmte Halterung nach einem der vorhergehenden Ansprüche, wobei der Abstand zwischen der Seitenwand (16) und dem jeweiligen Abschnitt (22) des Stützblocks (2) eine Funktion in Abhängigkeit von der gesamten Oszillation und der maximal zulässigen Neigung (α) der drehbaren Komponente (S) ist.

## Revendications

1. Support blindé en forme de Y pour installations industrielles, comprenant un bloc de support (2), qui est configuré pour être ancré à un support externe, un palier (4) et un dispositif d'étanchéité (8) ; dans lequel le bloc de support (2) possède un logement (3) à l'intérieur duquel ledit palier (4) est inséré; dans lequel ledit palier (4) comprend une bague fixe (6), une bague rotative (5) qui peut tourner par rapport à ladite bague fixe (6), et une pluralité d'éléments de roulement (7) interposés entre ladite bague fixe (6) et ladite bague rotative (5) ; dans lequel ladite bague rotative (5) est emboîtée, en utilisation, sur un composant rotatif (S) ; dans lequel lesdits éléments de roulement (7) permettent, en utilisation, une rotation de la bague rotative (5) par rapport à la bague fixe (6) ; dans lequel ladite bague fixe (6) est emboîtée par complémentarité de forme à l'intérieur dudit bloc de support (2) de façon à permettre à ladite bague fixe (6) d'être inclinée d'un angle (α) par rapport à un axe de rotation idéal ; dans lequel ledit composant rotatif est un arbre rotatif (S) ayant un axe de rotation (X) ; dans lequel ledit palier (4) est emboîté, en utilisation, sur ledit arbre rotatif (S) ; dans lequel la bague rotative est la bague interne (5) ; dans lequel ladite bague interne (5) est emboîtée sur ledit arbre rotatif (S) pour tourner autour de l'axe de rotation (X) entraîné par ledit arbre rotatif (S) ;
dans lequel ledit dispositif d'étanchéité (8) comprend un blindage (9) et une unité de liaison (11, 14), qui est configurée pour fixer, en utilisation, ledit blindage (9) audit composant rotatif (S) de façon à éviter, en utilisation, des mouvements relatifs entre ledit blindage (9) et ladite bague rotative (5) ; dans lequel ledit blindage (9) possède une ouverture (15) configurée pour loger, en utilisation, ledit arbre rotatif (S) ; dans lequel ladite unité de liaison (11, 14) est configurée pour faire tourner ledit blindage (9) d'une manière unifiée avec ladite bague interne (5) et ledit arbre rotatif (S) ; dans lequel ledit blindage (9) possède un corps en forme de coupelle ayant une paroi latérale circulaire (16), une paroi supérieure (18), dans lequel ladite ouverture (15) est réalisée dans ladite paroi supérieure (18) ; dans lequel ledit blindage (9) est axisymétrique autour d'un axe de symétrie (X') ; dans lequel l'extension radiale dudit blindage (9) est supérieure à l'extension radiale du palier (4) respectif,
**caractérisé en ce que**
ladite paroi latérale (16) est disposée autour d'une partie (22) respective du bloc de support (2) et encercle celle-ci ; dans lequel ladite paroi latérale (16) est espacée de ladite partie (22) de sorte que la paroi latérale (16) puisse tourner, en utilisation, sans contact autour de ladite partie (22) .

2. Support blindé selon la revendication 1, dans lequel ladite unité de liaison (11, 14) comprend un collier (11), qui est configuré pour être emboîté, en utilisation, directement sur ledit arbre rotatif (S) .

3. Support blindé selon la revendication 1, dans lequel ladite unité de liaison (11, 14) comprend un collier (11), qui est configuré pour être emboîté, en utilisation, sur une partie respective de ladite bague interne (5).

4. Support blindé selon la revendication 2 ou 3, dans lequel ledit blindage (9) possède un ou plusieurs trous (20), qui traversent ladite paroi supérieure (18) ; dans lequel ledit collier (11) possède, à son tour, un ou plusieurs trous (12) ; dans lequel ladite unité de liaison (11, 14) comprend une ou plusieurs attaches (14), chacune desquelles est configurée, en utilisation, pour passer à travers un trou (20) respectif dudit blindage (9) et un trou (12) respectif dudit collier (11).

5. Support blindé selon l'une quelconque des revendications 2 à 4 précédentes, dans lequel ledit blindage (9) possède un logement (21) qui est configuré pour loger, en utilisation, ledit collier (11) et pour être emboîté sur une partie (22) respective du bloc de support (2).

6. Support blindé selon l'une quelconque des revendications précédentes et comprenant un élément d'étanchéité interposé entre ladite paroi latérale (16) et la partie (22) respective du bloc de support (2) .

7. Support blindé selon l'une quelconque des revendications précédentes, dans lequel la distance entre la paroi latérale (16) et la partie (22) respective du bloc de support (2) est une fonction de l'oscillation radiale totale et de l'inclinaison (α) maximale autorisée du composant rotatif (S).
